# EUROPEAN PATENT APPLICATION

(11) **EP 1 072 472 A2**
(43) Date of publication of application: **31.01.2001**
(21) Application number: 00100135.3
(22) Date of filing: 07.01.2000
(51) Int. Cl.: B60R 9/12, A63C 11/02

(54) **Ski-rack applicable to motor vehicles, fixed structures and the like**

(30) Priority: 29.07.1999 IT MI991685
(71) Applicant: FABBRI S.r.l., I-25040 Bornato Cazzago S. Martino (Brescia) (IT)
(72) Inventor: Fabbri Corsarini, Luciano, 25017 Sedena Di Lonato (Brescia) (IT)
(74) Representative: Modiano, Guido, Dr.-Ing.

(57) **Abstract**

A ski-rack applicable to motor vehicles, fixed structures and the like, comprising a bracket-like element (1) which can be fixed to a supporting structure (3) and supports, on one arm thereof (5), at least one locking element (12) which is mounted so that it can oscillate in order to engage at least one ski arranged between the arms (5) of the bracket-like element (1).

## Description

The present invention relates to a ski-rack which can be applied to motor vehicles, fixed structures and the like.

It is known that ski-racks are already commercially available which are normally used to carry skis on all-terrain vehicles and substantially comprise a fork-like element having, on its opposite wings, flexible elements which provide edge elements which engage the skis to be retained, in practice supporting them below the region of the binding.

However, such ski-racks entail the drawback that they cannot easily adapt to different ski thicknesses; accordingly, for high thicknesses it is rather difficult or impossible to insert the ski and for low thicknesses the ski is not supported adequately and may be damaged.

The aim of the present invention is to eliminate the above-noted drawbacks, by providing a ski-rack applicable to motor vehicles, fixed structures and the like which can support the skis in a vertical position, automatically adapting to different ski thicknesses, offering a supporting action which is always constant and stable.

Within the scope of this aim, a particular object of the present invention is to provide a ski-rack in which there is no difficulty in positioning the skis, which are then automatically retained when locking is performed.

A further object of the present invention is to provide a ski-rack which can be applied both to motor vehicles and to fixed structures in general, offering the possibility to correctly support skis having dimensions which can vary in any manner.

A further object of the present invention is to provide a ski-rack which can be easily obtained starting from commonly commercially available elements and materials and is also competitive from a purely economical point of view.

This aim, these objects and others which will become apparent hereinafter are achieved by a ski-rack applicable to motor vehicles, fixed structures and the like, according to the present invention, characterized in that it comprises a bracket-like element which can be fixed to a supporting structure and supports, on one arm thereof, at least one locking element which is mounted so that it can oscillate in order to engage at least one ski arranged between the arms of said bracket-like element.

Further characteristics and advantages of the present invention will become apparent from the following detailed description of a preferred but not exclusive embodiment of a ski-rack applicable to motor vehicles, fixed structures and the like, illustrated only by way of non-limitative example with the aid of the accompanying drawings, wherein:
Figure 1 is a schematic perspective view of the ski-rack according to the present invention;
Figure 2 is a schematic perspective view of a ski-rack applied to the spare wheel of an all-terrain vehicle;
Figure 3 is a schematic view of the step for retaining a ski;
Figure 4 is a side view of the bracket-like element, illustrating the locking elements.

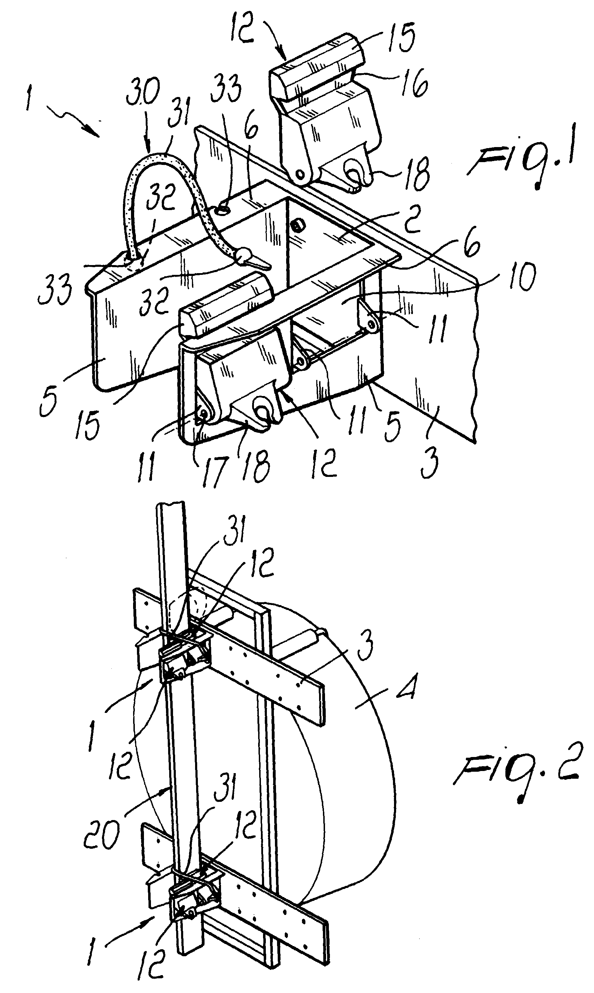

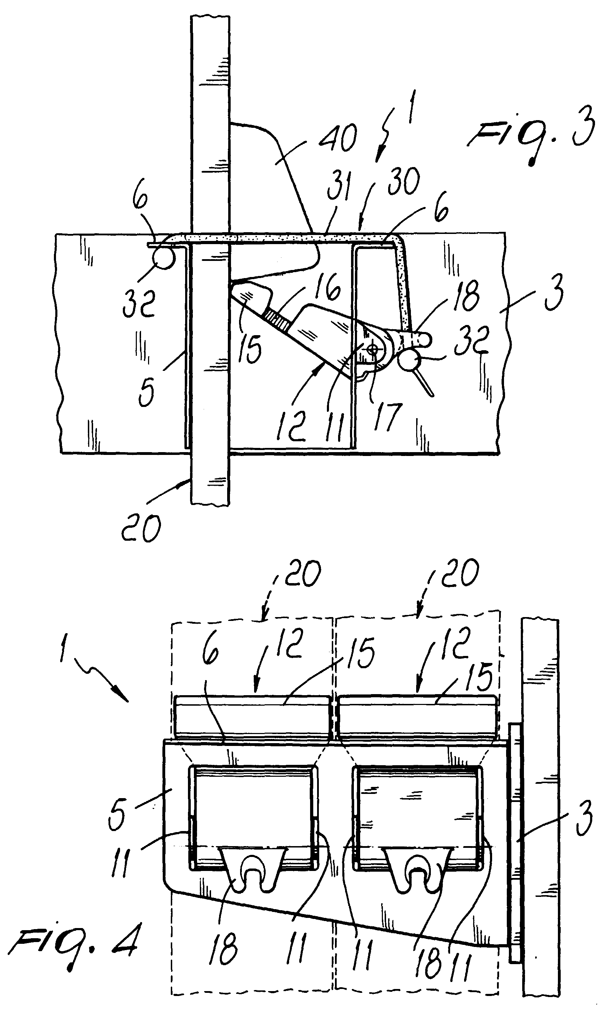

With reference to the accompanying figures, the ski-rack applicable to motor vehicles, fixed structures and the like, according to the present invention, comprises a bracket-like element, generally designated by the reference numeral 1, which is substantially U-shaped and has a central portion 2 provided with through holes for coupling to a supporting structure which can, for example, be a plate 3 which is connected to the wheel 4 of an all-terrain vehicle or a fixed structure, such as a wall or the like, or any other structure deemed appropriate.

The arms 5 of the bracket-like element 1 are provided, in an upward region, with an edge element 6 which also acts as a reinforcement element.

Openings 10 are formed in one of the arms and are provided with lugs 11 for the pivoting of locking elements, generally designated by the reference numeral 12, which are substantially paddle-shaped with an upper or end part 15 which is meant to engage by contact at least one ski (preferably a pair of skis) 20 arranged between the arms 5.

The end 15 is flanked by a tapering portion 16 which, in the inactive condition, allows the end 15 to partially overlap the edge element 6.

Moreover, the locking element 12 forms, at the end that lies opposite the end 15 with respect to the pivot 17 for pivoting to the lugs 11, a fork-like element 18 in which it is possible to insert a traction element 30 which is advantageously constituted by an elastic cord 31 having, at its ends, enlarged portions 32 which can be respectively accommodated in an open hole 33 formed in an edge element 6 and inside the fork 18.

The elastic return element 30 is meant to push the locking element against the ski 20 and to laterally surround the ski, accordingly retaining it in position.

Advantageously, on each arm 5 two locking elements are provided which allow to keep in position two skis arranged side by side or optionally two pairs of skis.

The locking element 12 preferably couples to the ski below the toe unit 40 of the binding, which accordingly provides a retention element.

From the above description it is thus evident that the invention achieves the intended aim and objects, and in particular it is stressed that the provision of an oscillating locking element allows to apply a correct pressing action to the ski, regardless of its thickness and without having to resort to the forcing that occurred with the solutions of the prior art, which used elastic lips.

The invention thus conceived is susceptible of numerous modifications and variations, all of which are within the scope of the inventive concept.

All the details may also be replaced with other technically equivalent elements.

In practice, the materials employed, as well as the contingent shapes and dimensions, may be any according to requirements.

The disclosures in Italian Patent Application No. MI99A001685 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A ski-rack applicable to motor vehicles, fixed structures and the like, characterized in that it comprises a bracket-like element which can be fixed to a supporting structure and supports, on one arm thereof, at least one locking element which is mounted so that it can oscillate in order to engage at least one ski arranged between the arms of said bracket-like element.

2. The ski-rack according to claim 1, characterized in that said bracket-like element is substantially U-shaped, with a central portion preset for coupling to said supporting structure.

3. The ski-rack according to claim 1, characterized in that the arms of said bracket-like element comprise an edge element in an upward region.

4. The ski-rack according to claim 1, characterized in that it comprises, in said arms, openings which have lugs for the pivoting of respective said locking elements.

5. The ski-rack according to claim 4, characterized in that said locking elements are substantially paddle-shaped, with an upper or end part which is adapted to engage said ski by contact.

6. The ski-rack according to claim 2, characterized in that it comprises a tapering portion proximate to said end for the at least partial overlap of said end on said edge element.

7. The ski-rack according to one or more of the preceding claims, characterized in that said locking element comprises, at the opposite end with respect to said end relative to the pivot, a fork-like element which can be detachably coupled to a traction element in order to push said paddle against said ski.

8. The ski-rack according to claim 7, characterized in that said traction element comprises an elastic cord which is provided, at its ends, with enlarged portions which can be accommodated respectively in an open hole which is formed in said edge element and in said fork.

9. The ski-rack according to claim 1, characterized in that it comprises two side-by-side locking elements on said bracket-like element.
